# EUROPEAN PATENT APPLICATION

(11) **EP 4 804 119 A1**
(43) Date of publication of application: **09.09.2026**
(21) Application number: 24885492.9
(22) Date of filing: 18.10.2024
(51) Int. Cl.: G06T 7/00, G06V 10/82

(54) **INFORMATION PROCESSING DEVICE, INFORMATION PROCESSING METHOD, AND COMPUTER-READABLE NON-TRANSITORY STORAGE MEDIUM**

(30) Priority: 31.10.2023 JP 2023186548
(71) Applicant: Sony Group Corporation, Tokyo 108-0075 (JP)
(72) Inventor: IRIE, Daisuke, Tokyo 108-0075 (JP)
(74) Representative: D Young & Co LLP
(86) International application number: PCT/JP2024/037227
(87) International publication number: WO 2025/094718

(57) **Abstract**

An information processing apparatus includes a DNN, a history image acquisition section, and a bright spot processing section. The DNN performs inference using a past frame as an input. The history image acquisition section acquires a history image corresponding to an inference result. The bright spot processing section removes a bright spot from an input current frame having continuity with the past frame on the basis of the input current frame, the history image, a motion vector between frames, and an occlusion map.

## Description

### Technical Field

The present invention relates to an information processing apparatus, an information processing method, and a computer-readable non-transitory storage medium.

### Background Art

In the field of video production, bright spot flickering often becomes a problem. For example, in CG rendering, a technique referred to as Temporal Anti Aliasing (TAA) is often employed for the purpose of anti-aliasing. On the other hand, in rendering of a moving subject or rendering using TAA, random bright spots may occur as flickers mainly in a subject with a high specular component and a high reflectance.

A bright spot of a specular component has a very high luminance value, and thus, for example, an attempt to suppress the bright spot using a simple image filter requires convolution resulting in constructive addition. In this case, the video is naturally severely blurred. In addition, when an image including a bright spot is input to, for example, a DNN for super-resolution, noticeable flickering occurs in an output result, resulting in a visually uncomfortable video.

Even in a case where a large amount of bright spot data is learned, such flickers cannot be sufficiently removed. In addition, the bright spot needs to be distinguished from a particle (effect) like a spark, but such processing is difficult. In a case where the bright spot fails to be distinguished from the particle, an attempt to remove the bright spot leads to simultaneous removal of the particle.

### Citation List

### Non Patent Literature

NPL 1: Yusuke Tokuyoshi and Anton S. Kaplanyan, "Improved Geometric Specular Antialiasing", I3D '19, May 21-23, 2019, Montreal, QC, Canada <Internet> http://www.jp.square-enix.com/tech/library/pdf/ImprovedGeometricSpecularAA.pdf (retrieved on October 19, 2023)

### Summary

### Technical Problem

Normally, in a case where such flickering occurs, countermeasures are taken by reducing the reflectance of an object material or adjusting roughness to obtain a smoother image. However, such an approach eliminates details of reflective representation of the material and needs to be introduced as internal processing of a renderer (before 2D imaging). Ideally, the bright spot can preferably be suppressed even after 2D imaging without reducing the level of the details.

Thus, the present disclosure proposes an information processing apparatus, an information processing method, and a computer-readable non-transitory storage medium that are capable of suppressing a defect in a video caused by bright spot flickering.

### Solution to Problem

The present disclosure provides an information processing apparatus including a DNN configured to perform inference using a past frame as an input, a history image acquisition section configured to acquire a history image corresponding to an inference result, and a bright spot processing section configured to remove a bright spot from an input current frame having continuity with the past frame on the basis of the input current frame, the history image, a motion vector between frames, and an occlusion map. According to the present disclosure, an information processing method in which the information processing of the information processing apparatus is executed by a computer, and a computer-readable non-transitory storage medium storing a program causing a computer to execute the information processing of the information processing apparatus are provided.

### Brief Description of Drawings

[Fig. 1] Fig. 1 is a diagram illustrating existing DNN processing for moving images.
[Fig. 2] Fig. 2 is a diagram illustrating an example of rendering without using TAA.
[Fig. 3] Fig. 3 is a diagram illustrating an example of rendering using TAA.
[Fig. 4] Fig. 4 is a diagram illustrating an example of light distribution characteristics of diffused light and reflected light.
[Fig. 5] Fig. 5 is a diagram illustrating an example in which a microfacet normal distribution function (NDF) is set on a surface of a CG object.
[Fig. 6] Fig. 6 is a diagram illustrating a configuration example of an information processing apparatus that performs DNN processing for moving images according to the present disclosure.
[Fig. 7] Fig. 7 is a diagram illustrating a flow of processing.
[Fig. 8] Fig. 8 is a diagram for describing an intermediate feature amount.
[Fig. 9] Fig. 9 is a diagram for describing an example of detection of a bright spot using a history image.
[Fig. 10] Fig. 10 is a diagram illustrating an example of a method of detecting an occlusion region.
[Fig. 11] Fig. 11 is a diagram illustrating an example of the method of detecting an occlusion region.
[Fig. 12] Fig. 12 is a diagram illustrating an example of a processing flow for performing inference processing.
[Fig. 13] Fig. 13 is a diagram illustrating the example of the processing flow for performing inference processing.
[Fig. 14] Fig. 14 is a diagram illustrating an example of a hardware configuration of an information processing apparatus.

### Description of Embodiments

Hereinafter, embodiments of the present disclosure will be described in detail with reference to the drawings. In the following embodiments, the same components are denoted by the same reference numerals, and redundant description thereof will be omitted.

The description will be given in the following order.
1. Background
   1-1. Existing DNN Processing for Moving Images
   1-2. Occurrence of Flickering of Bright Spots
2. Example of DNN Processing for Moving Images according to Present Disclosure
   2-1. System Configuration Example
   2-2. Detection of Bright Spot Using History Image
   2-3. Detection of Occlusion Region
   2-4. Example of Bright Spot Detection Processing
   2-5. Example of Bright Spot Removal Processing
   2-6. Processing Flow
3. Hardware Configuration Example
4. Effects

### 1. Background

### 1-1. Existing DNN Processing for Moving Images

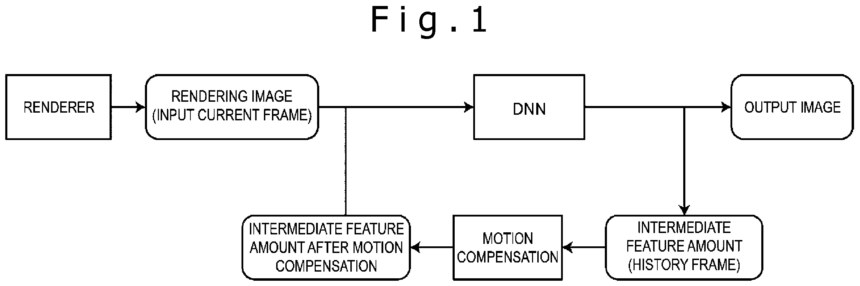

Fig. 1 is a diagram illustrating existing DNN processing for moving images.

In DNN processing for moving images, a Recurrent Neural Network (RNN) structure, which has high time stability, is generally used. The RNN structure can correlate a current frame and a history frame, and thus easily maintain the consistency of the video of output frames. The DNN has very high inference performance (for example, a sharpening effect in the case of super-resolution), but is affected by a small change in input data, leading to a change in output result. Accordingly, in moving image processing, flickering is more likely to occur than in simple filter processing. In order to improve time stability and suppress the flickering, an RNN structure is generally implemented to which a current frame and a history frame are simultaneously input and which can perform learning including learning of time correlation (similarity between the current frame and the history frame).

Note that the current frame means an image of a frame to be estimated by the DNN (current frame). The history frame means an image obtained by inputting an image of a past frame to the DNN (inference image), or an intermediate feature amount extracted from the image of the past frame. The past frame means a frame one or more frames before the current frame. In the present disclosure, for example, a frame one frame before the current frame (the most recent frame) is used as the past frame. Hereinafter, the current frame may be referred to as an "input current frame", and the history frame that is an inference result of the past frame may be referred to as an "inference history frame". In addition, an inference image inferred by the DNN and output as an RGB image may be described as an "output image".

The intermediate feature amount means information of a feature amount output from an intermediate layer of the DNN when the image of the past frame is input to the DNN. Using, as an inference history frame, the intermediate feature amount obtained during inference is known to produce an estimation result having higher accuracy than using the inference image (RGB image) of the past frame as an inference history frame. The present disclosure employs, as an inference history frame, the intermediate feature amount obtained during the inference.

The inference history frame is used as an input of the DNN together with the input current frame. In order to maintain consistency with the input current frame, motion compensation based on a motion vector is performed on the inference history frame. The motion vector means a vector indicating a motion of a subject between frames (an amount and a direction of movement of pixels). The motion compensation means processing of predicting data after motion from data before motion. For example, in a case where the motion compensation is applied to the image of the past frame, an image predicted in the current frame is acquired as an inference history frame subjected to the motion compensation. The inference history frame subjected to the motion compensation is input to the DNN together with the input current frame.

### 1-2. Occurrence of Flickering of Bright Spots

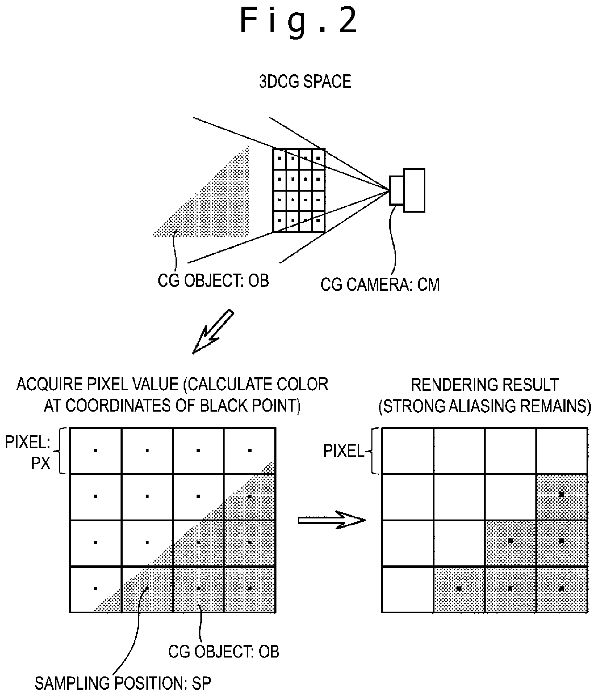

An example of occurrence of bright spot flickering will be described below with reference to Fig. 2 to Fig. 5.

In the production of a CG video, an anti-aliasing technique referred to as TAA may be employed. The TAA means a technique for suppressing aliasing (a step-like edge (jaggy) generated along an edge of a pixel PX when a diagonal line or a curve is drawn) by shifting a pixel sampling position SP in the time direction and adding up pieces of sampling information in the time direction. Shifting the sampling position SP at a sub-pixel level is referred to as addition of jitter.

Fig. 2 is a diagram illustrating an example of rendering without using the TAA. The renderer renders 3D data of a CG object OB from the viewpoint of a CG camera CM. The renderer acquires the pixel value of each pixel PX as color data at a certain fixed position of the pixel PX (for example, the center of the pixel PX). In this case, the rendering image includes noticeable aliasing remaining therein.

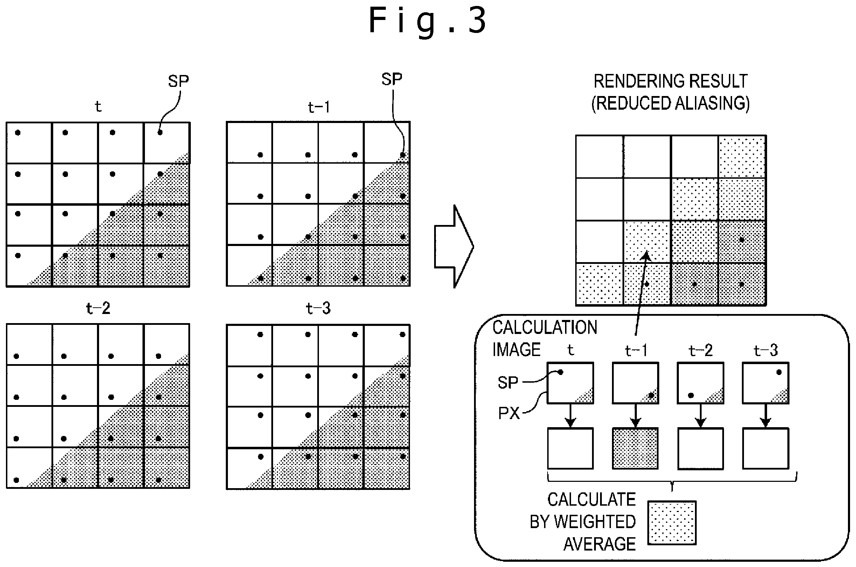

Fig. 3 is a diagram illustrating an example of rendering using the TAA. The pixel value of each pixel PX is calculated as a statistical value of color data at a plurality of points of time acquired while shifting the sampling position SP. In the example of Fig. 3, a value obtained by performing weighted averaging on four color data at a point of time t, a point of time (t-1), a point of time (t-3), and a point of time (t-3) is calculated as the pixel value at the point of time t. By performing synthesis with the sampling position SP shifted, a smooth image with blurred edges is obtained.

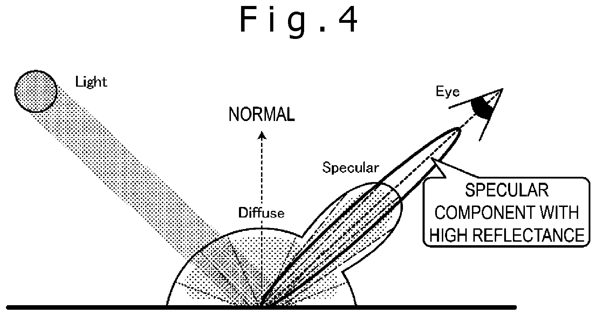

Shifting the sampling position SP is useful for enhancing the smoothness of the edge. However, in a portion where a bright spot is drawn, the pixel value greatly varies between a case where the sampling position SP is set on the bright spot and a case where the sampling position SP is set at a position deviated from the bright spot. The variation in the pixel value is recognized as a flicker of the bright spot. In particular, a specular component is subjected to a significant change in reflectance with respect to the angles of incidence and reflection and has a high luminance, and thus the flicker of the bright spot is likely to be noticeable. Fig. 4 is a schematic diagram illustrating an example of a light distribution characteristic of diffused light and reflected light. In a specular reflection direction, a light source directly enters the eye (CG camera CM), and a noticeable bright spot occurs.

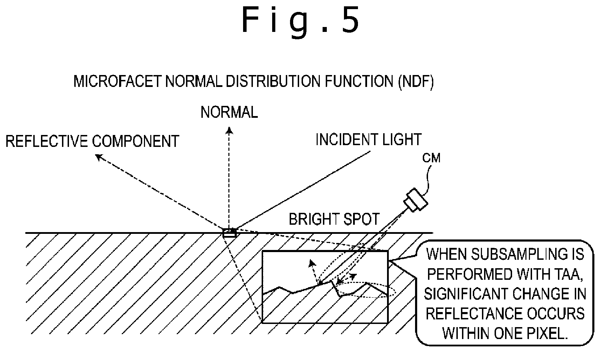

A fine normal distribution can be defined on the surface of the CG object OB to express complicated light reflection. Fig. 5 is a diagram illustrating an example in which a microfacet normal distribution function (NDF) is set on the surface of the CG object OB. The normal distribution allows fine unevenness to be expressed. When the sampling position SP is varied by the TAA, a frame appears in which strong reflection suddenly occurs within one pixel PX. This occurs because the sampling position SP overlaps the specular reflection position. When the sampling position SP varies in the vicinity of the specular reflection position, a variation in reflection intensity (bright spot flickering) occurs.

Non-Patent Document 1 proposes a method of avoiding a rapid change in reflection intensity by smoothly filtering the normal distribution function. However, this method is an approach to improve the internal processing of the renderer, and cannot be implemented without modifying a rendering engine. In addition, lighting has a reduced resolution even in a portion of the image with no bright spot flickering. In a case where the bright spots can be removed after rendering, anti-aliasing can be performed without modifying the rendering engine. From such a viewpoint, the present disclosure proposes a method of improving image quality without changing the internal structure of the renderer.

### 2. Example of DNN Processing for Moving Images according to Present Disclosure

### 2-1. System Configuration Example

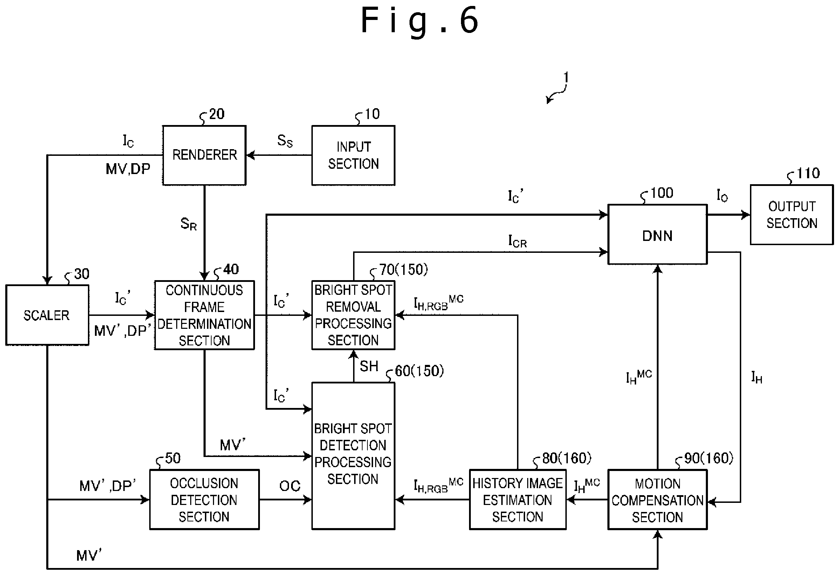

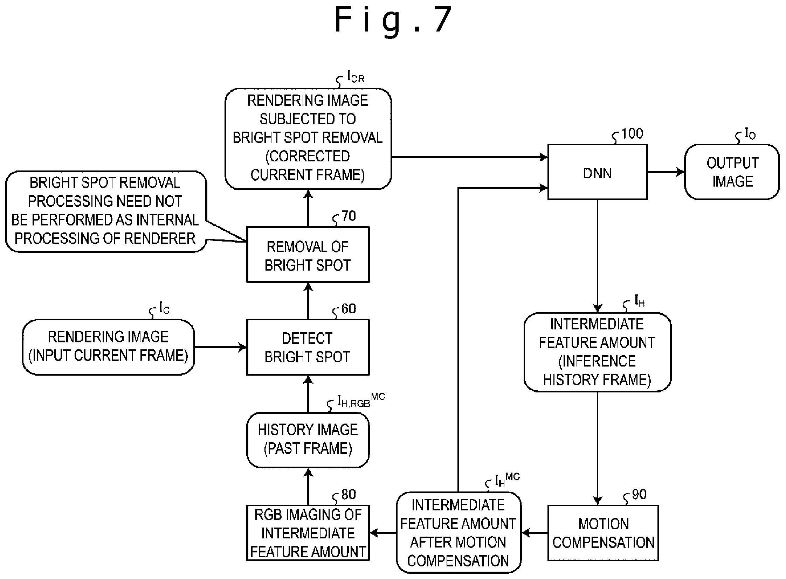

Fig. 6 is a diagram illustrating a configuration example of the information processing apparatus 1 that performs the DNN processing for moving images according to the present disclosure. Fig. 7 is a diagram illustrating a flow of processing.

The DNN processing for moving images according to the present disclosure is performed by the information processing apparatus 1. For example, the information processing apparatus 1 includes an input section 10, a renderer 20, a scaler 30, a continuous frame determination section 40, an occlusion detection section 50, a bright spot processing section 150, a history image acquisition section 160, a DNN 100, and an output section 110. The bright spot processing section 150 includes a bright spot detection processing section 60 and a bright spot removal processing section 70. The history image acquisition section 160 includes a history image estimation section 80 and a motion compensation section 90.

In the present disclosure, bright spots are detected based on differences between frames, and an image obtained by removing the bright spots from an input current frame I_{C} is input to the DNN 100. A past image to be subjected to calculation of differences from the input current frame is an inference image of the past frame (an output image I_{O} of the DNN 100) or an image corresponding to the inference image. In the present disclosure, the inference image of the past frame or the image corresponding to the inference image is described as a history image I_{H, RGB}^{MC}.

For example, the DNN 100 performs inference using the past frame as input. The history image acquisition section 160 acquires the inference result of the past frame output from the DNN 100, and acquires the history image I_{H, RGB}^{MC} corresponding to the inference result. The bright spot processing section 150 removes a bright spot from the input current frame I_{C} based on the input current frame I_{C} having continuity with the past frame, the history image I_{H, RGB}^{MC}, the motion vector MV between frames, and the occlusion map OC. Thus, a high-quality image not affected by bright spots is obtained. This will be described in detail below.

The input section 10 inputs an operation signal S_{S} to the renderer 20. For example, the operation signal S_{S} includes a rendering setting and a rendering execution command.

The renderer 20 performs rendering processing based on the operation signal S_{S}. The rendering processing includes setting of rendering conditions and execution of rendering. The renderer 20 acquires a rendering image corresponding to the input current frame I_{C} and a depth image DP according to the rendering execution command. The input current frame I_{C} indicates an image of one of continuous frames such as moving images. The depth image DP is a one dimensional image representing a depth. The block diagram of Fig. 6 illustrates operation on one frame of a moving image.

The renderer 20 acquires the motion vector MV of the subject on the basis of the rendering setting. The motion vector MV is a two dimensional vector that defines the movement of corresponding pixels between frames according to the amount of movement of pixels (the number of pixels). The motion vector MV can be acquired by general estimation processing using a group of continuous frames. In a case where the CG renderer is used, the motion vector MV can be generated and acquired during rendering. The renderer 20 sends, to the scaler 30, the input current frame I_{C}, the motion vector MV, and the depth image DP obtained by the rendering processing.

The renderer 20 acquires continuity determination information S_{R} based on the rendering setting, and sends the continuity determination information S_{R} to the continuous frame determination section 40. The continuity determination information S_{R} is information indicating whether or not the input current frame I_{C} output from the renderer 20 and the past frame have continuity. The continuity means that the input current frame I_{C} and the past frame are continuous moving image frames related to a common video scene.

For example, when the input current frame I_{C} is an initial frame of rendering or when a scene change occurs, the renderer 20 outputs 0 as the continuity determination information S_{R}. In other cases, that is, in a case where the input current frame I_{C} is a frame (continuous frame) having continuity and related to a video scene common to the past frame, the renderer 20 outputs 1 as the continuity determination information S_{R}.

The scaler 30 expands the number of pixels of the input current frame I_{C}, the motion vector MV, and the depth image DP, as necessary. Hereinafter, in a case where the data subjected to the expansion of the number of pixels by the scaler 30 needs to be distinguished from the data before the expansion, "'" is added after the reference numeral of the data. The scaler 30 sends the input current frame I_{C}' to the continuous frame determination section 40. The scaler 30 sends a motion vector MV' to the continuous frame determination section 40, the occlusion detection section 50, and the motion compensation section 90. The scaler 30 sends a depth image DP' to the continuous frame determination section 40 and the occlusion detection section 50.

In a case where the number of the pixels accepted by the architecture of the DNN 100 is fixed, whereas the number of the pixels of the input current frame I_{C} and the like varies depending on the usage, the scaler 30 may perform the processing of expanding the number of the pixels at a desired scale factor to obtain the number of pixels according to the specifications of the DNN 100. The method of expanding the number of pixels may be optionally selected from among, for example, bilinear and bicubic. For the method of expanding the motion vector MV, the nearest neighbor method is desirably applied in order to avoid generation of an intermediate value due to pixel interpolation while not limited thereto.

The continuous frame determination section 40 determines the continuity between the input current frame I_{C}' and the past frame on the basis of the continuity determination information S_{R}. In a case where the input current frame I_{C}' is a continuous frame, the continuous frame determination section 40 sends the input current frame I_{C}' to the bright spot detection processing section 60 and the bright spot removal processing section 70, and sends the motion vector MV' to the bright spot detection processing section 60. In a case where the input current frame I_{C}' is not a continuous frame, the continuous frame determination section 40 sends the input current frame I_{C}' to the DNN 100.

Note that the continuity between the frames may be determined based on information other than the continuity determination information S_{R}. For example, the continuous frame determination section 40 can also determine continuous frames by image processing using the input current frame I_{C}'_{,} the motion vector MV', and the depth image DP'.

The bright spot removal processing section 70 removes bright spots from the input current frame I_{C}' to generate a corrected current frame I_{CR}. For example, the bright spot removal processing section acquires a rendering image generated using the TAA as the input current frame I_{C}'. The bright spot removal processing section removes, from the input current frame I_{C}', a bright spot of a specular component generated by the TAA. The bright spot can be removed by, for example, replacing the image of the bright spot portion with the past frame or an image equivalent to the past frame.

The motion compensation section 90 performs the motion compensation on the inference history frame I_{H} obtained as the inference result for the past frame to generate a corrected history frame I_{H}^{MC}. The DNN 100 infers the input current frame I_{C}' on the basis of the corrected current frame I_{CR} and the corrected history frame I_{H}^{MC}.

In a case where the input current frame I_{C}' is a continuous frame, the DNN 100 receives the corrected current frame I_{CR} and the corrected history frame I_{H}^{MC} as inputs, and outputs the output image I_{O} and the intermediate feature amount. In a case where the input current frame I_{C}' is not a continuous frame, the DNN 100 receives the input current frame I_{C}' and the corrected history frame I_{H}^{MC} as inputs, and outputs the output image I_{O} and the intermediate feature amount.

The DNN 100 sends the output image I_{O} to the output section 110. The DNN 100 outputs the intermediate feature amount to the motion compensation section 90 as an inference history frame I_{H}. A value learned in advance is used as a coefficient value of the DNN 100. A learning task of the DNN 100 is assumed to be, for example, super-resolution, noise reduction, or style transfer, but the present disclosure is not limited thereto. The DNN 100 can be applied to general moving image processing using an RNN structure.

The motion compensation section 90 acquires, from the DNN 100, the inference history frame I_{H}, which is the inference result for the past frame. In the example of Fig. 6, the inference history frame I_{H} is an intermediate feature amount obtained by the DNN 100 during the inference of the past frame. In the present disclosure, an image and an intermediate feature amount obtained by inference may be simply referred to as an inference result. The motion compensation section 90 performs the motion compensation on the inference history frame I_{H}, on the basis of the motion vector MV' to generate corrected history frame I_{H}^{MC}. The motion compensation section 90 can apply, to the inference history frame I_{H}, general processing known as the motion compensation.

The motion vector MV' has a vector related to the amount of spatial movement of the subject between frames. The motion compensation is implemented as processing of predicting the data after motion from the data before the motion. The motion compensation section 90 applies the motion compensation to the intermediate feature amount in the past frame output from the DNN 100 (inference history frame I_{H}). The motion compensation allows calculation of a feature amount approximate to the intermediate feature amount of the input current frame I_{C}'. The motion compensation section 90 sends, to the history image estimation section 80, the inference history frame I_{H} subjected to the motion compensation (corrected history frame I_{H}^{MC}).

The history image estimation section 80 acquires an image corresponding to the inference image (output image I_{O}) of the past frame subjected to the motion compensation, from the corrected history frame I_{H}^{MC} as a history image I_{H, RGB}^{MC}. The acquisition of the history image I_{H, RGB}^{MC} is performed as processing of restoring, to the RGB image again, the corrected history frame I_{H}^{MC}, which is an intermediate feature amount of the RGB image. By the restoration processing, an image approximate to an image obtained by applying the motion compensation to the inference image of the past frame (output image I_{O}) is acquired as a history image I_{H, RGB}^{MC}.

The bright spot detection processing section 60 selectively detects a bright spot in the input current frame I_{C}' having continuity with the past frame. The bright spot detection processing section 60 determines the presence or absence of a bright spot for each pixel PX, and sends a determination result to the bright spot removal processing section 70 as a bright spot map. The bright spot map has, for each pixel PX, a determination value SH related to the presence or absence of a bright spot. For example, the bright spot detection processing section 60 assigns "1" to a pixel PX displaying a bright spot, as a determination value SH. The bright spot detection processing section 60 assigns "0" to a pixel PX not displaying a bright spot, as a determination value SH.

The bright spot detection processing section 60 acquires a difference between the input current frame I_{C}' and the history image I_{H, RGB}^{MC} as an inter-frame difference. The bright spot detection processing section 60 detects a bright spot of the input current frame I_{C}' on the basis of the inter-frame difference. The bright spot removal processing section 70 removes the bright spot detected by the bright spot detection processing section 60. In this configuration, the detection and removal of the bright spot are performed outside the renderer 20. The bright spot removal processing need not be performed as internal processing of the renderer 20, and the image quality can thus be improved without changing the internal structure of the renderer 20.

As described above, the inference history frame I_{H} is subjected to correction in consideration of the motion between frames; the correction is referred to as motion compensation. The motion compensation is performed as processing of predicting data of a current frame from a past frame, based on the motion between the frames.

However, in a case where a foreground is moved to expose a background portion thereof, the data of the background portion fails to be predicted from the inference history frame I_{H}. The reason is that the background portion is not exposed before the input current frame I_{C}' and thus that the pixel value to be referred to on the basis of the motion vector MV' is unknown. Accordingly, in the inference history frame I_{H} subjected to the motion compensation (corrected history frame I_{H}^{MC}), a data disturbance (ghost) occurs that indicates a trace of the foreground.

In the DNN 100, processing is performed that is similar to blending of the input current frame I_{C}' and the corrected history frame I_{H}^{MC}. When the corrected history frame I_{H}^{MC} including the ghost is input to the DNN 100, a video is generated in which the foreground before the movement is reflected as a shadow. This degrades video quality. Accordingly, in the present disclosure, the occlusion detection section 50 detects in advance a data region in which a ghost may occur. By distinguishing a disturbance of the video due to a ghost from a bright spot, the unnecessary processing of bright spots can be avoided, and the video quality is also enhanced.

For example, the occlusion detection section 50 detects a data region in the corrected history frame I_{H}^{MC} where a ghost may occur, as an occlusion region, based on the depth image DP' and the motion vector MV'. The occlusion detection section 50 generates, as an occlusion map OC, a map indicating the occlusion region, and sends the occlusion map OC to the bright spot detection processing section 60. The bright spot detection processing section 60 excludes the occlusion region from the detection target for a bright spot. Any method may be used to detect the occlusion region. For example, the occlusion region may be located based on the depth information of the current frame and the past frame.

The occlusion detection section 50 generates an occlusion map OC in which the occlusion region is labeled, and sends the occlusion map OC to the bright spot detection processing section 60. For example, the occlusion map OC labels the occlusion region and a region (non-occlusion region) other than the occlusion region according to occlusion values. For example, "0" is set as an occlusion value for each pixel included in the occlusion region, and "1" is set as an occlusion value for each pixel included in the non-occlusion region.

### 2-2. Detection of Bright Spot Using History Image

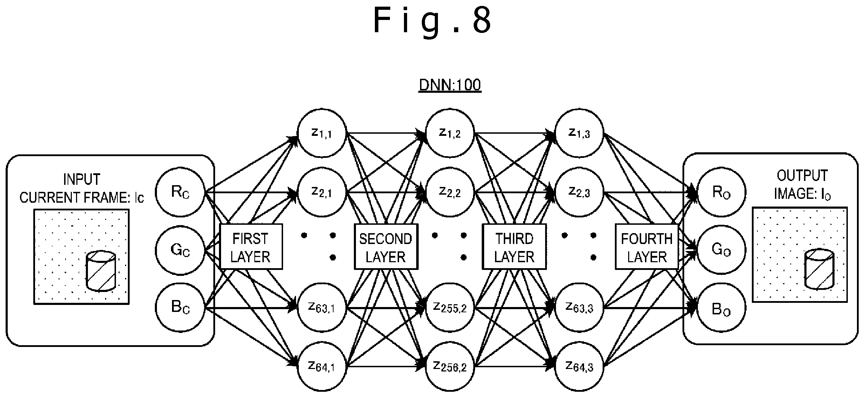

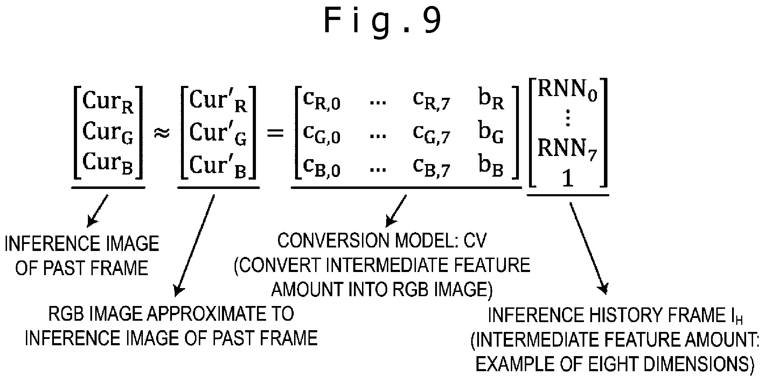

Fig. 8 is a diagram illustrating an intermediate feature amount. Fig. 9 is a diagram illustrating an example of detection of a bright spot using the history image I_{H, RGB}^{MC}.

The intermediate feature amount indicates an internal feature amount of the DNN 100. Fig. 8 illustrates a state in which the input current frame I_{C} is input to the DNN 100, and the feature amount z_{n, l} is obtained by convolution processing of a Convolutional Neural Network (CNN) layer. Here, "n" represents the number of dimensions. "l" represents a layer number. The DNN 100 is represented by four layers.

The final output of the DNN 100 is a three-dimensional RGB image obtained by compressing the 64-dimensional feature amounts of z_{1, 3} to z_{64, 3}. In the example of Fig. 8, the number of dimensions is 64, but the number of dimensions is determined depending on the configuration of the DNN 100 and need not necessarily be 64.

In the RNN structure, the inference accuracy is higher when such a higher multidimensional feature amount is used than when an RGB image is recursively used as an input. In the RNN structure of the present disclosure, the intermediate feature amount recursively used as the inference history frame I_{H} is a multidimensional feature amount (z_{1, l} to z_{n, l}) in a certain specific layer. In practice, a feature amount immediately before the last layer (the output of the third layer in the example of Fig. 8) is desirably used, which is a feature amount closer to the output, that is, a feature amount that expresses the training data well.

The history image estimation section 80 generates a history image I_{H, RGB}^{MC} from the inference history frame I_{H} using a conversion model CV that converts the intermediate feature amount obtained during the inference of the DNN 100 into an RGB image. For example, the history image estimation section 80 optimizes the conversion model CV to cause an RGB image obtained by applying the conversion model CV to the inference history frame I_{H} to approximate the inference image of the past frame (output image I_{O} of the DNN 100). The history image estimation section 80 calculates, as a history image I_{H, RGB}^{MC}, an image obtained by applying the optimized conversion model CV to the corrected history frame I_{H}^{MC}.

Optimization of the conversion model CV can be performed by a general regression model. As illustrated in Fig. 9, the conversion model CV represents a conversion matrix for converting the RNN feature amount into an RGB image. Fig. 9 illustrates an example of multiple regression analysis. For example, a red pixel value Cur_{R} is obtained by finding, by multiple regression analysis, the coefficients c_{R, 0}, ..., c_{R, 7} and b_{B}, which satisfy Cur_{R} = c_{R, 0}RNN₀+ ... +c_{R, 7}RNN₇ + b_{B}. "CurR_{"}, "Cur_{R}", and "Cur_{R}" indicate pixel values of R (red), G (green), and B (blue) in the inference image of the past frame (output image I_{O}). "c" and "b" represent coefficients of the conversion model CV.

In the example of Fig. 9, the feature amount has a total of eight channels (eight dimensions) from the 0th to the 7th, and the inference image has a total of three channels of R, G, and B. Note that the number of dimensions of the feature amount and the channels of the inference image are not limited to those described above. The number of dimensions of the feature amount may be nine or more, and the inference image may be a YUV image.

### 2-3. Detection of Occlusion Region

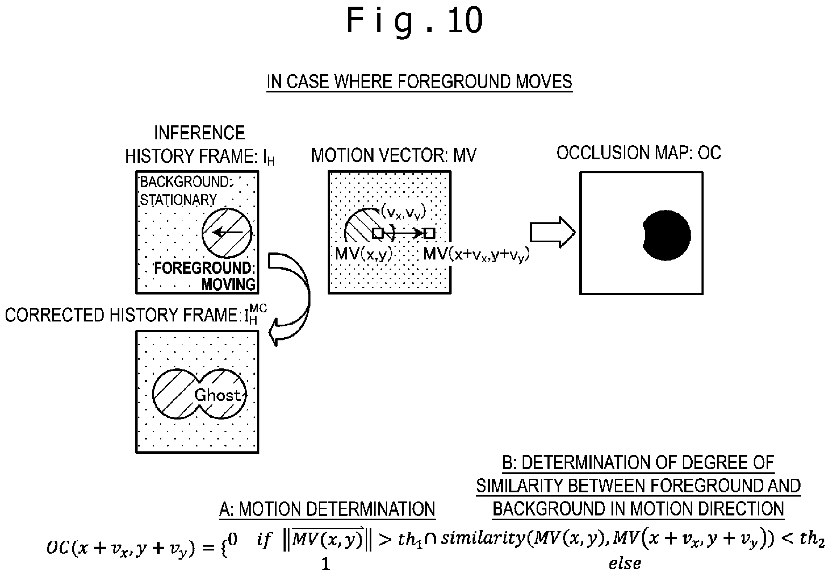

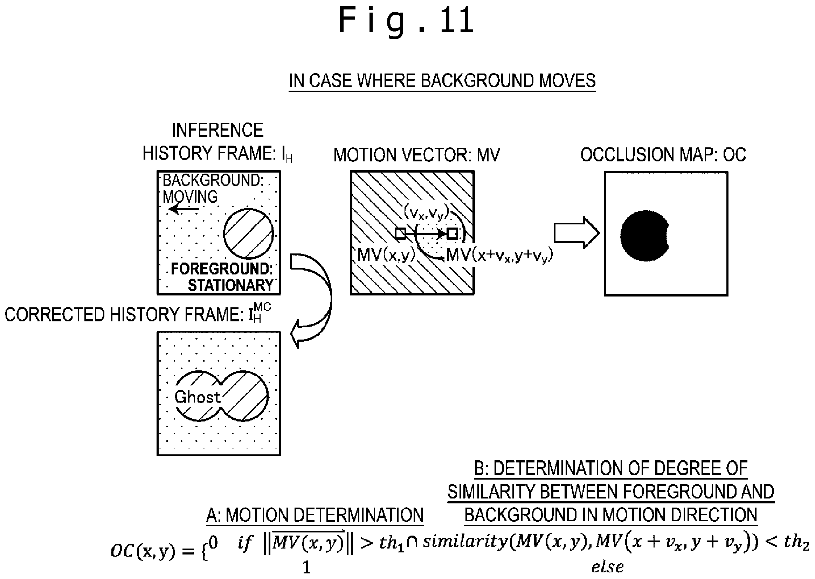

Fig. 10 and Fig. 11 are diagrams illustrating an example of a method of detecting an occlusion region.

The occlusion detection section 50 detects, based on the motion vector MV, the motion of a moving object as a foreground and the motion of a background (an image region as a reference destination from the foreground via the motion vector MV) hidden behind the moving object. The occlusion detection section 50 detects an occlusion region, based on the movement of the foreground and the background.

For example, the occlusion detection section 50 calculates the magnitude of misalignment and the degree of similarity in the moving direction between the foreground and the background, based on the motion vector MV. In a case where the magnitude of the misalignment is not at a noise level (condition A) and the degree of similarity in the moving direction does not satisfy a similarity condition (condition B), the occlusion detection section 50 determines that the region of the background overlapping the foreground is an occlusion region. In the present disclosure, "the degree of similarity between the moving direction of the foreground and the moving direction of the background does not satisfy the similarity condition" may be simply expressed as "the moving direction of the foreground is different from the moving direction of the background".

The degree of similarity can be calculated using the distances of vectors, cosine similarity, or the like. The noise level means that the magnitude of misalignment is large enough to be regarded as noise. That is, the condition A may be regarded as a condition that the magnitude of misalignment between the foreground and the background is larger than a threshold value representing noise. The similarity condition means a condition for determining similarity. The noise level and the similarity condition are hyperparameters that affect the inference accuracy of the DNN 100. These hyperparameters can be freely set by a system developer using a threshold value or the like while checking for a ghost actually caused by the motion compensation.

That is, the occlusion detection section 50 determines, on the basis of the motion vector MV, whether the predetermined conditions are satisfied, the predetermined conditions including the condition that the magnitude of misalignment between the foreground and the background is larger than a reference value indicating the noise level (condition A) and the condition that the moving direction of the foreground is different from the moving direction of the background (condition B). On the basis of the determination that the predetermined conditions are satisfied, the occlusion detection section 50 determines that the region of the background overlapping the foreground is an occlusion region.

The example of Fig. 10 illustrates a case where the foreground moves. In a case where the reference destination of the foreground is smaller in motion amount than the foreground, occlusion is considered to be occurring. In Fig. 10, the background is stationary and the foreground is moving to the left. The motion vector MV of a foreground pixel (x, y) is (vₓ, v_{y}). The occlusion region in a case where the foreground moves is a region that satisfies both the motion determination regarding the condition A (whether the moving object corresponding to the foreground has moved from the original location) and the degree of similarity determination regarding the condition B (whether the original location has not moved in the same direction as the moving object). The condition B suggests that occlusion does not occur in a case where the background moves at a speed similar to that of the foreground.

For example, for a certain pixel (x, y), whether an occlusion value OC (x + vₓ, y + v_{y}) is "0" (the pixel is included in the occlusion region) or "1" (the pixel is not included in the occlusion region) can be determined on the basis of the equation illustrated in Fig. 10. In the equation, "similarity" is a function indicating the degree of similarity between two motion vectors MV. "th1_{"} is a reference value indicating the noise level. "th2_{"} is a threshold value indicating the degree of similarity condition. "MV(x + vₓ, y + v_{y})" is the motion vector of the pixel (x + vₓ, y + v_{y}) in the background which is the reference destination of the pixel (x, y) in the foreground.

The example of Fig. 11 illustrates a case where the background moves. As in the example of Fig. 10, the occlusion region in the case where the background moves is detected as a region that satisfies both the motion determination regarding the condition A and the degree of similarity determination regarding the condition B. However, as indicated in the equation in Fig. 11, unlike in the case where the foreground moves, the coordinates of the determination result "OC (x, y)" are (x, y).

Although the case where the foreground moves (Fig. 10) and the case where the background moves (Fig. 11) are separately described here, the foreground and the background can be distinguished from each other on the basis of the respective depths. For example, the occlusion detection section 50 identifies the foreground and the background, on the basis of the depth information obtained from the depth image DP.

### 2-4. Example of Bright Spot Detection Processing

The bright spot detection processing is performed on the basis of, for example, the following determination criteria. The first determination criterion is whether the pixel value is close to white (high-luminance near-white determination). The bright spot tends to have a saturated luminance. Thus, the bright spot often has high luminance and is close to white. In a case where any pixel has high luminance and is close to white, the pixel is likely to be a bright spot. For example, the first determination criterion can be defined by the following Expression (1). In Expression (1), "Cur_{R}", "Cur_{G}", and "Cur_{B}" are pixel values of the red, green, and blue pixels PX of the input current frame I_{C}. "thW_{"} and "th_{S}" are thresholds indicating a white equivalent level. The white equivalent level can be optionally set by the system developer.
[Math. 1] $\frac{{Cur}_{G} + {Cur}_{B}}{{Cur}_{R}} + \frac{{Cur}_{R} + {Cur}_{B}}{{Cur}_{G}} + \frac{{Cur}_{R} + {Cur}_{G}}{{Cur}_{B}} < {th}_{w} , and {Cur}_{G} > {th}_{s}$

The second determination criterion is whether or not the variation in pixel value between frames is large (determination of the magnitude of the inter-frame difference). In a case where bright spot flickering occurs, the pixel value greatly varies between frames. In a case where any pixel has a pixel value varying greatly between frames, the pixel is likely to be a bright spot. For example, the second determination criterion can be defined by the following Expression (2). In Expression (2), "Cur_{R}", "Cur_{G}", and "Cur_{B} are the pixel values of the red, green, and blue pixels PX of the input current frame I_{C}. "HistR_{"}, "Hist_{G}", and "Hist_{B}" are the pixel values of the red, green, and blue pixels PX of the history image I_{H, RGB}^{MC}. "thd_{"} is a reference value indicating the noise level. The noise level data can be optionally set by the system developer.
[Math. 2] $\left|{Cur}_{R}-{Hist}_{R}\right| + \left|{Cur}_{G}-{Hist}_{G}\right| + \left|{Cur}_{B}-{Hist}_{B}\right| > {th}_{d}$

According to the above-described determination criteria, the bright spot detection processing section 60 can detect, as a bright spot, an image region having a pixel value of the white equivalent level (first determination criteria) and in which a magnitude of an inter-frame difference is larger than a reference value indicating the noise level (second determination criteria).

The third determination criterion is whether the pixel is included in an occlusion region (non-occlusion region determination). In the occlusion region, a data disturbance referred to as a ghost occurs. When a disturbance due to a ghost is confused with a bright spot, data that should not otherwise be removed is removed as a bright spot. Therefore, the occlusion region should be desirably removed from the detection target for a bright spot. The bright spot detection processing section 60 can acquire a non-occlusion region from the occlusion map OC and selectively detect a bright spot in the non-occlusion region.

The fourth determination criterion is whether the motion of the subject is slow enough to facilitate perception of bright spot flickering (motion amount determination). For a fast-moving subject, perceiving bright spot flickering is difficult. In order to suppress the risk of adverse effects on the video due to erroneous determination of bright spots, undue processing of removing bright spots is desirably avoided. Thus, the bright spot detection processing section 60 sets a reference value for the motion of the subject.

For example, the magnitude of the minimum motion vector MV at which bright spot flickering is difficult to perceive is set as the reference value. The range of motion vectors greater than the reference value is at an imperceptible level. The bright spot detection processing section 60 can exclude, from the detection target for a bright spot, an image region in which the motion of the subject is determined to be greater than the reference value on the basis of the motion vector MV.

The fourth determination condition can be defined by the following Expression 3. In Expression (3), "thₘ" is a reference value indicating the imperceptible level. The imperceptible level can be optionally set by the system developer. The bright spot detection processing section 60 acquires the reference value thₘ indicating the imperceptible level from, for example, default information registered in the system, and applies the reference value thₘ to Expression (3).
[Math. 3] $\sqrt{{MV}_{x}^{2} + {MV}_{y}^{2}} < {th}_{m}$

The fifth determination criterion is whether the video scene is changing discontinuously (continuous frame determination). In a case where the input current frame I_{C} is an initial frame for rendering or in a case where a scene change occurs, the input current frame I_{C} and the past frame are completely different images. When bright spot determination is performed on the basis of Expression (1) and Expression (2), the determination may be erroneous.

Thus, the continuous frame determination section 40 determines, on the basis of the continuity determination information S_{R}, whether the input current frame I_{C} is a frame (continuous frame) having continuity related to a video scene common to the past frame. The bright spot detection processing section 60 performs the bright spot detection processing only in a case where the input current frame I_{C} is a continuous frame.

### 2-5. Example of Bright Spot Removal Processing

The bright spot removal processing is performed as follows, for example. First, the bright spot removal processing section 70 uses the following Expression (4) to calculate a pixel value of a pixel PX that is regarded as displaying a bright spot. In Expression (4), "Cur'" is a pixel value of the input current frame I_{C} subjected to bright spot removal (corrected current frame I_{CR}). "Cur" is the pixel value of the input current frame I_{C} before the bright spot removal. "Hist" is the pixel value of the history image I_{H, RGB}^{MC}. "α" is a blend ratio, and the value of the blend ratio α is, for example, 0.9. The blend ratio α can be optionally set by the system developer.
[Math. 4] $Cur ′ = α Hist + \left(1-α\right) Cur$

The bright spot removal processing section 70 blends the pixel value of a bright spot included in the input current frame I_{C} with the pixel value of the history image I_{H, RGB}^{MC} to generate a corrected current frame I_{CR}. In Expression (4), the bright spot is removed by alpha blending of the input current frame I_{C} and the history image I_{H, RGB}^{MC}, but the method of removing bright spots is not limited to the alpha blending.

The bright spot removal processing section 70 does not particularly perform the bright spot removal processing on pixels PX that do not display bright spots. The pixel value of the input current frame I_{C} directly serves as the pixel value of the corrected current frame I_{CR} (see the following Expression (5)).
[Math. 5] $Cur ′ = Cur$

### 2-6. Processing Flow

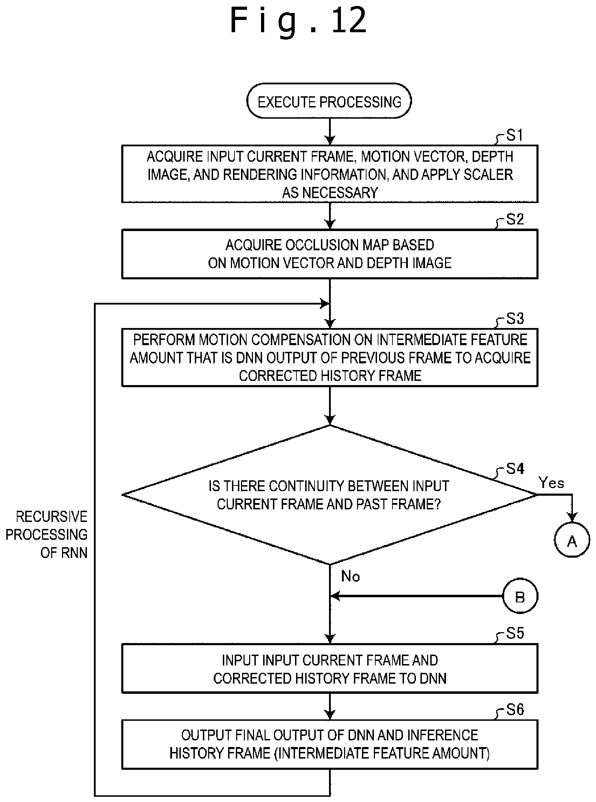

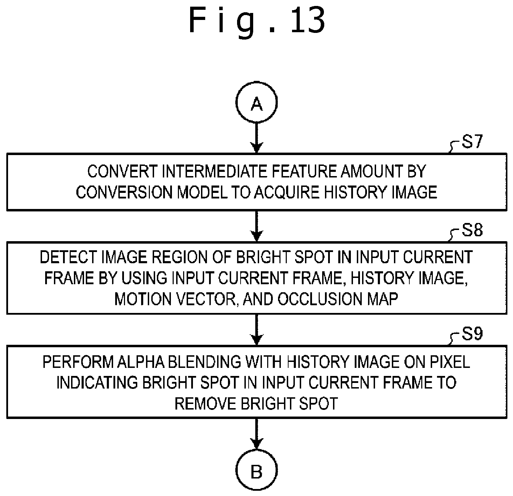

Fig. 12 and Fig. 13 are diagrams illustrating an example of a processing flow for performing inference processing.

The scaler 30 acquires, from the renderer 20, the input current frame I_{C}, the motion vector MV, the depth image DP, and information regarding the rendering setting (rendering information) and the like. The scaler 30 expands the numbers of pixels in the input current frame I_{C}, the depth image DP, and the motion vector MV as necessary to obtain an input current frame I_{C}', a motion vector MV', and a depth image DP' (step S1).

The occlusion detection section 50 acquires the occlusion map OC on the basis of the depth image DP' and the motion vector MV' (step S2). The motion compensation section 90 performs, on the basis of the motion vector MV', the motion compensation on the intermediate feature amount (inference history frame I_{H}), which is a DNN output of the previous frame, to acquire the corrected history frame I_{H}^{MC} (step S3).

The continuous frame determination section 40 determines whether there is continuity between the input current frame I_{C}' and the past frame that is the inference target of the previous frame, on the basis of the continuity determination information S_{R} acquired from the renderer 20 (step S4).

In a case where there is no continuity (step S4: No), the continuous frame determination section 40 and the motion compensation section 90 input the input current frame I_{C}' and the corrected history frame I_{H}^{MC} to the trained DNN 100 (step S5). The DNN 100 sends the output image I_{O}, which is an inference result, to the output section 110. Additionally, the DNN 100 outputs the intermediate feature amount obtained by the inference to the motion compensation section 90 as an inference history frame I_{H} for the next video processing (step S6). Subsequently, the recursive processing of the RNN is repeated.

When there is continuity (step S4: Yes), the history image estimation section 80 uses the conversion model CV to convert the intermediate feature amount into a history image I_{H, RGB}^{MC} (step S7). The bright spot detection processing section 60 detects the image region of a bright spot in the input current frame I_{C}' by using the input current frame I_{C}', the history image I_{H, RGB}^{MC}, the motion vector MV', and the occlusion map OC (step S8). The bright spot removal processing section 70 performs the alpha blending with the history image I_{H, RGB}^{MC} on the pixel indicating the bright spot in the input current frame I_{C}', and removes the bright spot (step S9). Subsequently, the processing proceeds to step S5.

### 3. Hardware Configuration Example

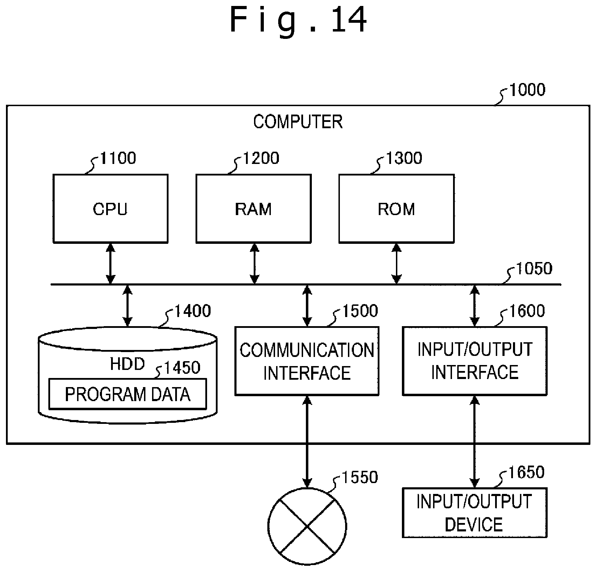

Fig. 14 is a diagram illustrating an example of a hardware configuration of the information processing apparatus 1.

The information processing of the information processing apparatus 1 is realized by, for example, a computer 1000. The computer 1000 includes a central processing unit (CPU) 1100, a random access memory (RAM) 1200, a read only memory (ROM) 1300, a hard disk drive (HDD) 1400, a communication interface 1500, and an input/output interface 1600. The units of the computer 1000 are connected together via a bus 1050.

The CPU 1100 operates on the basis of a program (program data 1450) stored in the ROM 1300 or the HDD 1400, and controls each section. For example, the CPU 1100 expands the program stored in the ROM 1300 or the HDD 1400 to the RAM 1200 and executes processing corresponding to various programs.

The ROM 1300 stores a boot program such as a basic input output system (BIOS) executed by the CPU 1100 at the time of activation of the computer 1000, a program depending on hardware of the computer 1000, and the like.

The HDD 1400 is a non-transitory computer-readable recording medium in which a program executed by the CPU 1100 and data used by the program are non-transitorily recorded. For example, the HDD 1400 is a recording medium in which an information processing program of the embodiment is recorded as an example of the program data 1450.

The communication interface 1500 is an interface for connecting the computer 1000 to an external network 1550 (for example, the Internet). For example, the CPU 1100 receives data from another piece of equipment via the communication interface 1500 or transmits data generated by the CPU 1100 to the another piece of equipment via the communication interface 1500.

The input/output interface 1600 is an interface for connecting the input/output device 1650 and the computer 1000. For example, the CPU 1100 receives data from input devices such as a keyboard and a mouse via the input/output interface 1600. The CPU 1100 also sends data to output devices such as a display, speakers, and a printer via the input/output interface 1600. The input/output interface 1600 may function as a media interface that reads a program or the like recorded in a predetermined recording medium (media). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, when the computer 1000 functions as the information processing apparatus 1 according to the embodiment, the CPU 1100 of the computer 1000 executes the information processing program loaded onto the RAM 1200 to realize the functions of the above-described units. Additionally, the HDD 1400 stores the information processing program, various models, and various types of data of the present disclosure. Note that the CPU 1100 reads the program data 1450 from the HDD 1400 and executes the program, but in another example, the CPU 1100 may acquire these programs from another device via the external network 1550.

### 4. Effects

The information processing apparatus 1 includes the DNN 100, the history image acquisition section 160, and the bright spot processing section 150. The DNN 100 performs the inference using a past frame as an input. The history image acquisition section 160 acquires a history image I_{H, RGB}^{MC} corresponding to the inference result. The bright spot processing section 150 removes a bright spot from the input current frame I_{C} on the basis of the input current frame I_{C} having continuity with the past frame, the history image I_{H, RGB}^{MC}, the motion vector MV between the frames, and the occlusion map OC. In the information processing method according to the present disclosure, the processing of the information processing apparatus 1 is executed by the computer 1000. The computer-readable non-transitory storage medium of the present disclosure stores a program that causes the computer 1000 to execute the processing of the information processing apparatus 1.

According to this configuration, the bright spot is successfully removed from the inference result. Thus, a possible defect in the video caused by bright spot flickering is suppressed.

The history image acquisition section 160 performs the motion compensation on the inference history frame I_{H} obtained as the inference result to generate a corrected history frame I_{H}^{MC}. The history image acquisition section 160 acquires the history image I_{H, RGB}^{MC} on the basis of the corrected history frame I_{H}^{MC}. The bright spot processing section 150 blends the pixel value of a bright spot included in the input current frame I_{C} with the pixel value of the history image I_{H, RGB} ^{MC} to generate a corrected current frame I_{CR}.

According to this configuration, the bright spot is successfully removed from the input current frame I_{C}.

The history image acquisition section 160 acquires the intermediate feature amount obtained during the inference as the inference history frame I_{H}. The history image acquisition section 160 generates a corrected history frame I_{H}^{MC} by performing the motion compensation on the inference history frame I_{H}.

According to this configuration, the inference accuracy of the DNN 100 is increased compared to the inference accuracy achieved in a case where image data is input.

The history image acquisition section 160 generates a history image I_{H, RGB}^{MC} from the inference history frame I_{H} using the conversion model CV that converts the intermediate feature amount into an RGB image.

According to this configuration, the history image I_{H, RGB}^{MC} can be easily acquired.

The history image acquisition section 160 optimizes the conversion model CV to make the RGB image approximate to the output image I_{O} of the DNN 100. The history image acquisition section 160 calculates, as the history image I_{H, RGB}^{MC}, an image obtained by applying the optimized conversion model CV to the corrected history frame I_{H}^{MC}.

According to this configuration, the history image I_{H, RGB}^{MC} is obtained that is approximate to the output image I_{O} subjected to the motion compensation.

The bright spot processing section 150 acquires a difference between the input current frame I_{C} and the history image I_{H, RGB}^{MC} as an inter-frame difference. The bright spot processing section 150 detects a bright spot in the input current frame I_{C} on the basis of the inter-frame difference.

According to this configuration, the inference history frame I_{H}.is used to generate an image corresponding to the inference image of the past frame (history image I_{H, RGB}^{MC}). This eliminates the need for a VRAM for storing the inference image itself of the past frame (output image I_{O}), thus reducing the implementation cost.

The bright spot processing section 150 detects, as a bright spot, an image region having a pixel value of the white equivalent level and in which the magnitude of the inter-frame difference is larger than a reference value indicating the noise level.

According to this configuration, a bright spot with high luminance is successfully detected at which flickering is easily perceived.

The information processing apparatus 1 includes the occlusion detection section 50. The occlusion detection section 50 detects, on the basis of the motion vector MV, an occlusion region in which a ghost may occur, and generates an occlusion map OC. The bright spot processing section 150 excludes the occlusion region from the detection target for a bright spot.

This configuration suppresses the confusion between a bright spot and a disturbance of the video caused by a ghost, which leads to unnecessary processing for bright spots.

The occlusion detection section 50 determines, on the basis of the motion vector MV, whether the predetermined conditions are satisfied, the predetermined conditions including the condition that the magnitude of misalignment between the foreground and the background is larger than the reference value indicating the noise level and the condition that the moving direction of the foreground is different from the moving direction of the background. On the basis of the determination that the predetermined conditions are satisfied, the occlusion detection section 50 determines that the region of the background overlapping the foreground is an occlusion region.

According to this configuration, the occlusion region can be adequately acquired.

The occlusion detection section 50 identifies the foreground and the background on the basis of the depth information.

According to this configuration, the foreground and the background can be adequately identified.

The bright spot processing section 150 excludes, from the detection target for a bright spot, an image region in which the motion of the subject is determined to be larger than the reference value on the basis of the motion vector MV.

According to this configuration, unnecessary processing for bright spots is suppressed. This also suppresses the risk of adverse effects on the video due to erroneous determination of bright spots.

The information processing apparatus 1 includes the continuous frame determination section 40. The continuous frame determination section 40 determines continuity between the input current frame I_{C} and the past frame. The bright spot processing section 150 selectively performs the detection of the bright spot on the input current frame I_{C} having continuity.

This configuration suppresses the confusion between a bright spot and flickering caused by discontinuity of the video, which leads to unnecessary processing for bright spots.

The bright spot processing section 150 acquires a rendering image generated using the TAA as an input current frame I_{C}. The bright spot processing section 150 removes, from the input current frame I_{C}, a bright spot of a specular component generated by the TAA.

This configuration suppresses bright spot flickering with high luminance, which is likely to be caused by the TAA.

The above description relates to the configuration example that does not use the VRAM for storing the inference image itself (output image I_{O}) of the past frame. On the other hand, in a configuration example in which the VRAM for storing the output image I_{O} is implemented in advance, the DNN 100 may output the inference result as an RGB image and record the RGB image in the VRAM. For example, the DNN 100 outputs the RGB image obtained by the inference to the VRAM as the output image I_{O}. The history image acquisition section 160 acquires the RGB image corresponding to the input current frame I_{C}, from the VRAM as the history image I_{H, RGB}^{MC}.

Note that the effects described in the present specification are merely examples and are not limited, and other effects may be provided.

### Appendix

Note that the present technology may also take the following configurations.
(1) An information processing apparatus including:
   a DNN configured to perform inference using a past frame as an input;
   a history image acquisition section configured to acquire a history image corresponding to an inference result;
   a bright spot processing section configured to remove a bright spot from an input current frame having continuity with the past frame on the basis of the input current frame, the history image, a motion vector between frames, and an occlusion map.
(2) The information processing apparatus according to (1), wherein
   the history image acquisition section generates a corrected history frame by performing motion compensation on an inference history frame obtained as the inference result, and acquires the history image on the basis of the corrected history frame, and
   the bright spot processing section blends a pixel value of the bright spot included in the input current frame with a pixel value of the history image to generate a corrected current frame.
(3) The information processing apparatus according to (2), wherein
   the history image acquisition section acquires, as the inference history frame, an intermediate feature amount obtained during inference, and performs the motion compensation on the inference history frame to generate the corrected history frame.
(4) The information processing apparatus according to (3), wherein
   the history image acquisition section generates the history image from the inference history frame using a conversion model that converts the intermediate feature amount into an RGB image.
(5) The information processing apparatus according to (4), wherein
   the history image acquisition section optimizes the conversion model such that the RGB image approximates an output image of the DNN, and calculates, as the history image, an image obtained by applying the conversion model optimized to the corrected history frame.
(6) The information processing apparatus according to any one of (1) to (5), wherein
   the bright spot processing section acquires a difference between the input current frame and the history image as an inter-frame difference, and detects a bright spot of the input current frame on the basis of the inter-frame difference.
(7) The information processing apparatus according to (6), wherein
   the bright spot processing section detects, as the bright spot, an image region having a pixel value of a white equivalent level and in which a magnitude of the inter-frame difference is larger than a reference value indicating a noise level.
(8) The information processing apparatus according to (7), further including:
   an occlusion detection section configured to detect, on the basis of the motion vector, an occlusion region in which a ghost may occur, and to generate the occlusion map, wherein
   the bright spot processing section excludes the occlusion region from a detection target for the bright spot.
(9) The information processing apparatus according to (8), wherein
   the occlusion detection section
   determines, on the basis of the motion vector, whether a predetermined condition is satisfied, the predetermined condition being a condition that a magnitude of misalignment between a foreground and a background is larger than a reference value indicating a noise level and a moving direction of the foreground is different from a moving direction of the background, and
   determines, on the basis of the determination that the predetermined condition is satisfied, that a region of the background overlapping the foreground is the occlusion region.
(10) The information processing apparatus according to claim 9, wherein
   the occlusion detection section identifies the foreground and the background on the basis of depth information.
(11) The information processing apparatus according to any one of (7) to (10), wherein
   the bright spot processing section excludes, from a detection target for the bright spot, an image region in which motion of a subject is determined to be larger than the reference value on the basis of the motion vector.
(12) The information processing apparatus according to any one of (6) to (11), further including:
   a continuous frame determination section configured to determine the continuity between the input current frame and the past frame, wherein
   the bright spot processing section selectively performs the detection of the bright spot on the input current frame having the continuity.
(13) The information processing apparatus according to any one of (1) to (12), wherein
   the bright spot processing section acquires, as the input current frame, a rendering image generated using Temporal Anti-Aliasing (TAA), and removes, from the input current frame, the bright spot of a specular component generated by the TAA.
(14) The information processing apparatus according to any one of (1) to (13), wherein
   the DNN outputs an RGB image obtained by the inference to a VRAM as an output image, and
   the history image acquisition section acquires, as the history image, the RGB image corresponding to the input current frame from the VRAM.
(15) An information processing method executed by a computer, the information processing method including:
   performing inference using a past frame as an input;
   acquiring a history image corresponding to an inference result;
   removing a bright spot from an input current frame having continuity with the past frame on the basis of the input current frame, the history image, a motion vector between frames, and an occlusion map.
(16) A non-transitory computer-readable storage medium storing a program causing a computer to implement:
   performing inference using a past frame as an input;
   acquiring a history image corresponding to an inference result;
   removing a bright spot from an input current frame having continuity with the past frame on the basis of the input current frame, the history image, a motion vector between frames, and an occlusion map.

### Reference Signs List

1 Information processing apparatus
40 Continuous frame determination section
50 Occlusion detection section
100 DNN
150 Bright spot processing section
160 History image acquisition section
CV Conversion model
I_{C}, I_{C}' Input current frame
I_{CR} Corrected current frame
I_{H} Inference history frame
I_{H}^{MC} Corrected history frame
I_{H}, _{RGB}^{MC} History image
MV, MV' Motion vector
OC Occlusion map

## Claims

1. An information processing apparatus comprising:
a DNN configured to perform inference using a past frame as an input;
a history image acquisition section configured to acquire a history image corresponding to an inference result;
a bright spot processing section configured to remove a bright spot from an input current frame having continuity with the past frame on the basis of the input current frame, the history image, a motion vector between frames, and an occlusion map.

2. The information processing apparatus according to claim 1, wherein
the history image acquisition section generates a corrected history frame by performing motion compensation on an inference history frame obtained as the inference result, and acquires the history image on the basis of the corrected history frame, and
the bright spot processing section blends a pixel value of the bright spot included in the input current frame with a pixel value of the history image to generate a corrected current frame.

3. The information processing apparatus according to claim 2, wherein
the history image acquisition section acquires an intermediate feature amount obtained during inference as the inference history frame, and performs the motion compensation on the inference history frame to generate the corrected history frame.

4. The information processing apparatus according to claim 3, wherein
the history image acquisition section generates the history image from the inference history frame using a conversion model that converts the intermediate feature amount into an RGB image.

5. The information processing apparatus according to claim 4, wherein
the history image acquisition section optimizes the conversion model such that the RGB image approximates an output image of the DNN, and calculates, as the history image, an image obtained by applying the conversion model optimized to the corrected history frame.

6. The information processing apparatus according to claim 1, wherein
the bright spot processing section acquires a difference between the input current frame and the history image as an inter-frame difference, and detects a bright spot of the input current frame on the basis of the inter-frame difference.

7. The information processing apparatus according to claim 6, wherein
the bright spot processing section detects, as the bright spot, an image region having a pixel value of a white equivalent level and in which a magnitude of the inter-frame difference is larger than a reference value indicating a noise level.

8. The information processing apparatus according to claim 7, further comprising:
an occlusion detection section configured to detect, on the basis of the motion vector, an occlusion region in which a ghost may occur, and to generate the occlusion map, wherein
the bright spot processing section excludes the occlusion region from a detection target for the bright spot.

9. The information processing apparatus according to claim 8, wherein
the occlusion detection section
determines, on the basis of the motion vector, whether a predetermined condition is satisfied, the predetermined condition being a condition that a magnitude of misalignment between a foreground and a background is larger than a reference value indicating a noise level and a moving direction of the foreground is different from a moving direction of the background, and
determines, on the basis of the determination that the predetermined condition is satisfied, that a region of the background overlapping the foreground is the occlusion region.

10. The information processing apparatus according to claim 9, wherein
the occlusion detection section identifies the foreground and the background on the basis of depth information.

11. The information processing apparatus according to claim 7, wherein
the bright spot processing section excludes, from a detection target for the bright spot, an image region in which motion of a subject is determined to be larger than the reference value on the basis of the motion vector.

12. The information processing apparatus according to claim 6, further comprising:
a continuous frame determination section configured to determine the continuity between the input current frame and the past frame, wherein
the bright spot processing section selectively performs the detection of the bright spot on the input current frame having the continuity.

13. The information processing apparatus according to claim 1, wherein
the bright spot processing section acquires, as the input current frame, a rendering image generated using Temporal Anti-Aliasing (TAA), and removes, from the input current frame, a specular bright spot of the bright spots generated by the TAA.

14. The information processing apparatus according to claim 1, wherein
the DNN outputs an RGB image obtained by inference to a VRAM as an output image, and
the history image acquisition section acquires, as the history image, the RGB image corresponding to the input current frame from the VRAM.

15. An information processing method executed by a computer, the information processing method comprising:
performing inference using a past frame as an input;
acquiring a history image corresponding to an inference result; and
removing a bright spot from an input current frame having continuity with the past frame on the basis of the input current frame, the history image, a motion vector between frames, and an occlusion map.

16. A non-transitory computer-readable storage medium storing a program causing a computer to implement:
performing inference using a past frame as an input;
acquiring a history image corresponding to an inference result; and
removing a bright spot from an input current frame having continuity with the past frame on the basis of the input current frame, the history image, a motion vector between frames, and an occlusion map.
